**Europäisches Patentamt**

**European Patent Office**

**Office européen des brevets**

(19)

(11) **EP 1 304 885 A2**

(12) **EUROPÄISCHE PATENTANMELDUNG**

(43) Veröffentlichungstag:
   **23.04.2003 Patentblatt 2003/17**

(51) Int Cl.⁷: **H04N 7/30**, H04N 7/32

(21) Anmeldenummer: **02102308.0**

(22) Anmeldetag: **05.09.2002**

(84) Benannte Vertragsstaaten:
   **AT BE BG CH CY CZ DE DK EE ES FI FR GB GR IE IT LI LU MC NL PT SE SK TR**
   Benannte Erstreckungsstaaten:
   **AL LT LV MK RO SI**

(30) Priorität: **14.09.2001 DE 10145372**
       **05.06.2002 DE 10224996**

(71) Anmelder: **SIEMENS AKTIENGESELLSCHAFT**
   **80333 München (DE)**

(72) Erfinder:
   • **Bäse, Gero**
     **81371, München (DE)**
   • **Oertel, Norbert**
     **81669 München (DE)**
   • **Pandel, Jürgen Dr.**
     **83620, Feldkirchen-Westerham (DE)**

(54) **Verfahren und Computerprogrammprodukt zur Codierung und Decodierung von Videosignalen**

(57) Es wird vorgeschlagen, die Spektralkoeffizienten einer transformierten Prädiktionsfehlermatrix (PFM) durch Abtasten (16) zu linearisieren und in einer Folge von Pegeln und Längen umzuwandeln. Die Pegelkoeffizienten werden durch Sortieren (17) der Größe ihres Betrages nach angeordnet. Die daraus entstehende Pegelfolge (18) sowie eine Sortierinformation (19) werden einer differentiellen Codierung (20) unterzogen.

FIG 2

**Beschreibung**

Die Erfindung betrifft Verfahren zur Codierung und Decodierung von Videosignalen. Ferner betrifft die Erfindung ein Computerprogrammprodukt.

Insbesondere zum Transport von Videodaten über paketorientierte Datennetze ist eine effektive Codierung der Videosignale nötig, da die Bandbreite von paketorientierten Datennetzen eng begrenzt ist. Es sind daher standardisierte Verfahren, wie beispielsweise MPEG-1, MPEG-2 und H.26L entwickelt worden, mit denen sich Videosignale effektiv codieren und komprimieren lassen. Die standardisierten Verfahren arbeiten mit der bewegungskompensierenden Hybrid-Codierung, einer Kombination aus verlustloser Redundanzreduktion und verlustbehafteter Irrelevanzreduktion.

Am meisten trägt zur Kompression die sogenannte bewegungskompensierende Prädiktion bei. Die bewegungskompensierende Vorhersage oder auch Prädiktion nutzt die Ähnlichkeit aufeinanderfolgender Bilder aus, indem sie das aktuell zu codierende Bild aus bereits übertragenen Bildern vorhersagt. Da sich meist nur bestimmte Teile aufeinanderfolgender Bilder bewegen, zerlegt ein Encoder das aktuell zu codierende Bild in rechteckige Makroblöcke. Für jeden dieser Makroblöcke sucht der Codierer aus den bereits übertragenen Bildern passende Makroblöcke heraus und berechnet deren Verschiebung zu den Makroblöcken des aktuell zu codierenden Bildes. Die Verschiebungen der Makroblöcke werden durch Bewegungsvektoren beschrieben, die vom Codierer anhand von Codetabellen codiert werden.

Da das aktuell zu codierende Bild nicht in jedem Fall durch die Verschiebung von Makroblöcken bereits übertragener Bilder konstruiert werden kann, beispielsweise bei neu ins Bild kommenden Objekten, muss auch der Vorhersagefehler oder Prädiktionsfehler vom Codierer an den Decodierer übertragen werden. Dieser Prädiktionsfehler ergibt sich aus der Differenz zwischen dem tatsächlich aktuell zu codierenden Bild und dem durch Verschieben der Makroblöcke aus vorhergehenden Bildern konstruierten Prädiktionsbild.

Da die Prädiktionsfehler benachbarter Bildpunkte mit nicht oder nur schlecht prädizierbaren Bereichen korrelieren, wird zur weiteren Redundanzreduktion eine Transformation der Prädiktionsfehler vom Orts- in den Frequenzbereich durchgeführt. Je nach Kompressionsverfahren kommen dabei verschiedene Transformationsverfahren zur Anwendung. Üblich sind beispielsweise die diskrete Wavelet-Transformation (DWT) oder die diskrete Cosinus-Transformation (DCT) sowie die Integer-Transformation. Durch die Transformation werden beispielsweise die einem Makroblock aus 8 x 8 Bildpunkten zugeordneten Prädiktionsfehlerdaten in eine transformierte Prädiktionsfehlermatrix von 8 x 8 Spektralkoeffizienten transformiert. Dabei stellt der erste Spektralkoeffizient die mittlere Helligkeit dar, weshalb dieser auch als "Gleichanteil" bezeichnet wird. Die restlichen Spektralkoeffizienten spiegeln mit steigender Indexzahl höherfrequente Anteile der Prädiktionsfehlerdaten wider und werden daher auch als "Wechselanteile" bezeichnet.

Um die erforderliche Datenrate weiter zu verringern, werden die Spektralkoeffizienten vor der weiteren Codierung quantisiert. Wenn sich die Prädiktionsfehlerdaten von Bildpunkt zu Bildpunkt nur langsam ändern, sind nach der Quantisierung die meisten hochfrequenten Spektralkoeffizienten gleich Null. Nach der Quantisierung liegt daher in der Regel eine dünn besetzte transformierte und quantisierte Prädiktionsfehlermatrix vor, bei der nur die Spektralkoeffizienten in der Nähe des Gleichanteils ungleich Null sind. Die transformierte und quantisierte Prädiktionsfehlermatrix wird nachfolgend durch einen Abtastvorgang der Spektralkoeffizienten linearisiert. Die sich durch das Abtasten ergebende Reihe von Spektralkoeffizienten wird als eine Folge von Tupeln dargestellt, die jeweils eine Länge und einen Pegel enthalten. Der Pegel gibt dabei den Wert eines Spektralkoeffizienten an, der ungleich Null ist, wohingegen die Länge die Anzahl der Nullen angibt, die zwischen dem Pegel und dem vorangegangenen Spektralkoeffizienten ungleich Null liegen. Die Folge von Pegeln und Längen wird schließlich einer Entropiecodierung zugeführt.

Ausgehend von diesem Stand der Technik liegt der Erfindung die Aufgabe zugrunde, die bekannten Verfahren zur Videocodierung und Videodecodierung weiter zu verbessern.

Diese Aufgabe wird erfindungsgemäß durch ein Verfahren mit den folgenden Verfahrensschritten gelöst:

- Bereitstellen einer Prädiktionsfehlermatrix;
- Umwandeln der Prädiktionsfehlermatrix in eine Folge von Pegelkoeffizienten und Längenkoeffizienten von Nullfolgen;
- Sortieren der Pegelkoeffizienten nach ihrem Betrag und Bilden einer Folge von Sortierkoeffizienten; und
- Differentielles Codieren der Pegelkoeffizienten.

Diese Aufgabe wird ferner durch ein Verfahren zur Decodierung von Videosignalen mit den folgenden Verfahrensschritten gelöst:

- Differentielles Decodieren der Pegelkoeffizienten;
- Decodieren einer Sortierinformation und Umsortieren der Pegelkoeffizienten anhand der Sortierinformation; und
- Umwandeln der Folge von Pegelkoeffizienten und Längenkoeffizienten von Nullfolgen in eine Prädiktionsfehler-

matrix.

Durch die Sortierung der Pegel nach der Größe ihres Betrags entsteht eine Pegelfolge, in der sich aufeinanderfolgende Pegel nur wenig unterscheiden. Die sortierte Pegelfolge kann daher besonders effektiv differentiell codiert werden, indem Differenzen zwischen Pegeln gebildet werden und anschließend die Differenzbeträge einer Entropiecodierung unterzogen werden.

Bei einer bevorzugten Ausführungsform werden die Differenzbeträge durch Tupeln beschrieben, bei denen eine erste Zahl die Differenz zu einem benachbarten Pegel und eine zweite Zahl angibt, wie oft der Pegel auftritt.

Da in der sortierten Pegelfolge häufig gleiche Pegel hintereinander auftreten, kann die in den Pegeln enthaltene Information auf effektive Weise durch die beschriebenen Tupel zusammengefasst werden. Ein weiterer Vorteil dieser Darstellung ist, dass kein separates Symbol benötigt wird, das das Ende der Pegelfolge anzeigt.

Bei einer weiteren bevorzugten Ausführungsform werden auch die Sortierinformationen differentiell codiert. Die Codierung der Sortierinformation erfolgt dabei vorzugsweise mit Hilfe eines Prädiktors, indem jeweils die Differenzen zu dem Prädiktor berechnet werden. Der Wert des Prädiktors ist in einer steigenden Folge von Sortierkoeffizienten jeweils gleich dem zuletzt codierten Sortierkoeffizienten. Falls ein Sortierkoeffizient codiert werden soll, der kleiner als der vorhergehende Sortierkoeffizient ist, wird der Prädiktor wieder auf Null zurückgesetzt.

Durch diese Vorgehensweise ist eine besondere effektive Codierung der Sortierinformation möglich, da die großen Werte der Sortierkoeffizienten in eine Folge von häufig gleichen, betragsmäßig kleinen Differenzwerten umgewandelt werden, die sich für eine effiziente Codierung besonders eignen.

Weitere Einzelheiten der Erfindung sind Gegenstand der abhängigen Ansprüche.

Nachfolgend werden Ausführungsbeispiele der Erfindung anhand der beigefügten Zeichnung im Einzelnen erläutert. Es zeigen:

Figur 1    ein Blockdiagramm, das den Ablauf eines Codierverfahrens zeigt; und

Figur 2    ein Blockdiagramm mit Teilschritten des Codierverfahrens aus Figur 1.

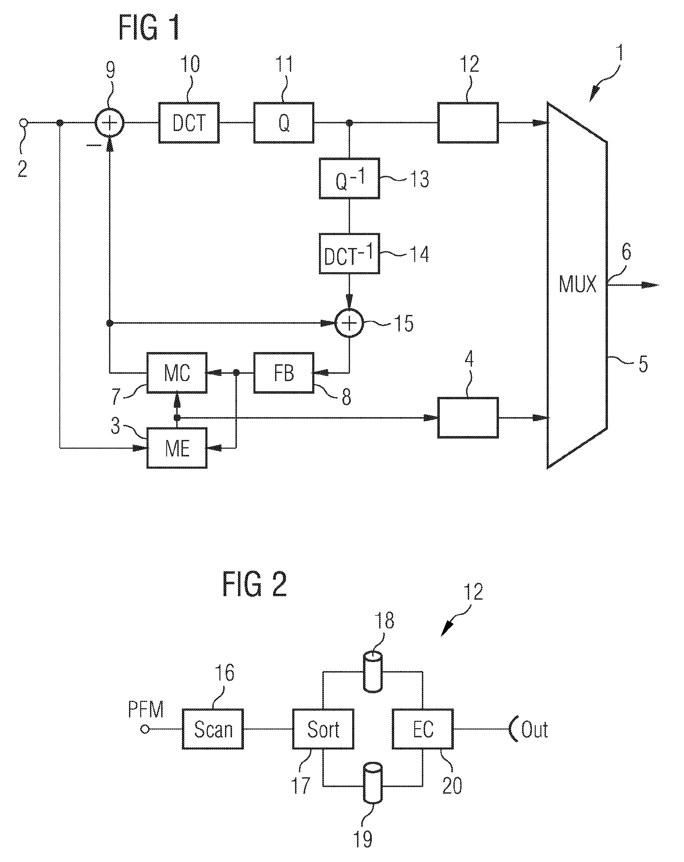

Das in Figur 1 dargestellte Blockdiagramm eines Codierverfahrens kann auch als das Blockdiagramm einer Vorrichtung, nämlich als das Blockdiagramm eines Encoders aufgefasst werden. Der Einfachheit halber wird im Folgenden das Codierverfahren anhand des in Figur 1 dargestellten Encoders 1 näher erläutert. Dem Fachmann ist jedoch klar, dass damit im Grunde auch ein Codierverfahren beschrieben wird.

Figur 1 zeigt einen Encoder oder Codierer 1, der nach dem Prinzip der bewegungskompensierenden Hybrid-Codierung arbeitet. Der Codierer 1 verfügt über einen Eingang 2, über den der Videodatenstrom dem Codierer 1 zugeführt wird. Insbesondere werden über den Eingang 2 dem Codierer Videodaten einer Bildfolge zugeführt. Eine Bewegungsschätzeinheit 3 segmentiert ein aktuell zu codierendes Bild des Videodatenstroms in rechteckige Makroblöcke, die meist 8 x 8 oder 16 x 16 Bildpunkte groß sind. Für jeden dieser Makroblöcke sucht die Bewegungsschätzeinheit 3 aus den bereits übertragenen Bildern passende Makroblöcke heraus und berechnet deren Bewegungsvektoren. Die Bewegungsvektoren können dann mit Hilfe von herkömmlichen Codetabellen oder aber auch mit Hilfe einer kontextsensitiven Codiereinheit 4 codiert und über einen Multiplexer 5 in einen an einem Ausgang 6 ausgegebenen Bitstrom eingebettet werden. Die von der Bewegungsschätzeinheit 3 berechneten Bewegungsvektoren der Makroblöcke werden auch einem Bewegungskompensator 7 mitgeteilt, der ausgehend von den in einem Bildspeicher 8 abgespeicherten, bereits übertragenen Bildern das sich durch die Verschiebung der Makroblöcke der bereits übertragenen Bildern ergebende Prädiktionsbild berechnet. Dieses Prädiktionsbild wird in einem Subtrahierer 9 von dem ursprünglichen Bild subtrahiert, um einen Vorhersagefehler zu erzeugen, der einem diskreten Cosinus-Transformator 10 mit nachfolgendem Quantisierer 11 zugeführt wird. Der Vorhersagefehler wird auch als Prädiktionsfehler oder als Textur bezeichnet. Der transformierte und quantisierte Vorhersagefehler wird an eine weitere, kontextsensitive Codiereinheit 12 weitergeleitet, die die transformierten und quantisierten Vorhersagefehlerdaten in Bitstromsegmente wandelt, die von dem Multiplexer 5 ausgelesen und in den am Ausgang 6 ausgegebenen Bitstrom eingebettet werden.

Durch die Verarbeitung im diskreten Cosinus-Transformator 10 werden die Makroblöcke mit beispielsweise 8 x 8 Bildpunkten als Matrix von 64 Spektralkoeffizienten dargestellt. Dabei enthält der erste Koeffizient die mittlere Helligkeit und wird deshalb auch als Gleichanteil oder DC-Koeffizient bezeichnet. Die restlichen Spektralkoeffizienten geben mit steigender Indexzahl höherfrequente Anteile der Helligkeitsverteilung wieder, weshalb sie als Wechselanteile oder AC-Koeffizienten bezeichnet werden. Durch den nachfolgenden Quantisierer 11 wird die Datenrate weiter verringert. Denn bei flächigen Elementen ändert sich der Vorhersagefehler von Bildpunkt zu Bildpunkt nur langsam, so dass nach der Verarbeitung im Quantisierer 11 die hochfrequenten Spektralkoeffizienten gleich Null sind und daher gar nicht erst übertragen werden müssen.

Der Quantisierer 11 kann darüber hinaus auch psychovisuelle Effekte berücksichtigen. Denn das menschliche Gehirn nimmt niederfrequente Bildkomponenten, nämlich flächenmäßig ausgedehnte Bildkomponenten, wesentlich deutlicher wahr als hochfrequente Bildkomponenten, nämlich Details. Daher können die hochfrequenten Spektralkoeffizienten gröber quantisiert werden als die niederfrequenten Spektralkoeffizienten.

Um die im Bildspeicher 8 abgelegten bereits übertragenen Bilder nachzuführen, werden die Spektralkoeffizienten einem inversen Quantisierer 13 und einem inversen diskreten Cosinus-Transformator 14 zugeführt und die so rekonstruierten Daten des Vorhersagefehlers auf das von dem Bewegungskompensator 7 erzeugte Prädiktionsbild in einem Addierer 15 aufaddiert. Das so erzeugte Bild entspricht demjenigen Bild, das beim Decodieren entsteht. Dieses Bild wird im Bildspeicher 8 abgelegt und dient der Bewegungsschätzeinheit 3 als Basis für die Berechnung der Bewegungsvektoren des folgenden Bildes.

Die Funktion der Codiereinheit 12 wird nachfolgend anhand Figur 2 näher beschrieben.

Die in Figur 2 dargestellte Codiereinheit 12 umfasst eine Abtasteinheit 16, die die vom Quantisierer 11 gelieferten Prädiktionsfehlermatrizen PFM linearisiert und in einer Folge von Pegeln und Längen umwandelt. Ein der Abtasteinheit 16 nachgeschalteter Sortierer 17 sortiert die Pegel der Größe ihres Betrages nach. Dadurch entsteht eine sortierte Pegelfolge 18, die ebenso wie Sortierinformationen 19 einem Entropiecodierer 20 zugeführt wird.

Das Sortierverfahren selbst wird nachfolgend im Einzelnen beschrieben:

Die von der Abtasteinheit 16 gelieferten Pegel werden vorzugsweise zunächst der Größe ihres Betrages nach sortiert. Prinzipiell kommen für die Sortierung der Pegel nach ihrem Betrag alle gängigen Sortierverfahren in Frage. Ein Sortierverfahren, das sich jedoch besonders gut dafür eignet, ist "Insertionsort", da die Folge von Pegeln häufig, bis auf zwischengeschobenen Nullen, bereits sortiert ist. Elementare Sortierverfahren und auch das Verfahren "Insertionsort" sind zum Beispiel aus dem Buch von Robert Sedgewick, "Algorithmen", Addison-Wesley, 1991, Kap. 8, S. 121-136 als solche bekannt.

Mit der Sortierung der Pegel wird auch ein der Pegelfolge zugeordnetes Indexfeld umgestellt. Das aus der Sortierung der Pegel im Sortierer 17 resultierende Indexfeld wird bei einer vorteilhaften Ausgestaltung des Sortierverfahrens nicht direkt codiert und übertragen, sondern zuerst mit Hilfe eines Markerfeldes M, das die gleiche Dimension wie das Indexfeld hat und das initial an allen Positionen nicht markiert ist, in die Sortierinformation 19 umgewandelt.

Die Sortierinformation 19 wird dabei auf folgende Weise gebildet. Sind insgesamt k Pegel von Null verschieden, so wird für die ersten k Indizes des unsortierten Indexfeldes in ihrer gegebenen Reihenfolge im Markerfeld von Beginn an die Anzahl der nicht markierten Stellen gezählt, bis der Index erreicht ist, der im sortierten Indexfeld als nächstes zu codieren ist. Die Anzahl der nicht markierten Stellen wird gespeichert und später dem Entropiecodierer 20 zugeführt und an den Decoder gesendet. Anschließend wird die Position im Markerfeld als markiert gekennzeichnet und mit dem nächsten Index fortgefahren.

Im einfachsten Fall, wenn keine Umsortierung der Pegel stattfindet, besteht die Sortierinformation aus lauter Nullen.

Es sei darauf hingewiesen, dass dem Decoder nur die Positionen der Pegel bekannt sein müssen, die von Null verschieden sind. An allen anderen Positionen müssen sich zwangsläufig Nullen befinden. Es ist also völlig ausreichend, nur die ersten k Positionen des Indexfeldes zu betrachten, wenn k Pegel ungleich Null sind.

Im folgenden wird anhand eines konkreten Ausführungsbeispiels die Durchführung der Sortierung und die Bildung der Sortierinformation 19 gezeigt:

Zu codieren seien folgende Folge von Koeffizienten:

| Index | 1 | 2 | 3 | 4 | 5 | 6 | 7 | 8 | ... | 16 |
|---|---|---|---|---|---|---|---|---|---|---|
| Level | -1 | -2 | 1 | 0 | 0 | -2 | -1 | 0 | ... | 0 |

Das Sortierverfahren "Insertionsort" läuft dann wie in der nachfolgenden Tabelle wiedergegeben ab:

| Schritt | | | | | | | | | | |
|---|---|---|---|---|---|---|---|---|---|---|
| 1 | Index | 1 | | | | | | | | |
| | Level | -1 | | | | | | | | |
| 2 | Index | 2 | 1 | | | | | | | |
| | Level | -2 | -1 | | | | | | | |
| 3 | Index | 2 | 1 | 3 | | | | | | |
| | Level | -2 | -1 | 1 | | | | | | |
| 4 | Index | 2 | 1 | 3 | 4 | | | | | |
| | Level | -2 | -1 | 1 | 0 | | | | | |

(fortgesetzt)

| Schritt | | | | | | | | | | |
|---|---|---|---|---|---|---|---|---|---|---|
| 5 | Index | 2 | 1 | 3 | 4 | 5 | | | | |
| | Level | -2 | -1 | 1 | 0 | 0 | | | | |
| 6 | Index | 2 | 6 | 1 | 3 | 4 | 5 | | | |
| | Level | -2 | -2 | -1 | 1 | 0 | 0 | | | |
| 7 | Index | 2 | 6 | 1 | 3 | 7 | 4 | 5 | | |
| | Level | -2 | -2 | -1 | 1 | -1 | 0 | 0 | | |
| 8 | Index | 2 | 6 | 1 | 3 | 7 | 4 | 5 | 8 | |
| | Level | -2 | -2 | -1 | 1 | -1 | 0 | 0 | 0 | |
| ... | | | | | | | | | | |
| 16 | Index | 2 | 6 | 1 | 3 | 7 | 4 | 5 | 8 | ... | 16 |
| | Level | -2 | -2 | -1 | 1 | -1 | 0 | 0 | 0 | ... | 0 |

Die Pegel sind nun ihrem Betrag nach in absteigender Reihenfolge sortiert. Fünf Pegel sind von Null verschieden. Für diese fünf Pegel muss nun eine Sortierinformation gebildet werden. Dies geschieht in den folgenden fünf Schritten:

| Schritt | | 1 | 2 | 3 | 4 | 5 | 6 | 7 |
|---|---|---|---|---|---|---|---|---|
| 1 | Markerfeld vorher | | | | | | | |
| | Index | 2 | | | | | | |
| | Resultat | 1 | | | | | | |
| | Markerfeld nachher | | X | | | | | |
| 2 | Markerfeld vorher | 1. | X | 2. | 3. | **4.** | | |
| | Index | 6 | | | | | | |
| | Resultat | **4** | | | | | | |
| | Markerfeld nachher | | X | | | | X | |
| 3 | Markerfeld vorher | | X | | | | X | |
| | Index | 1 | | | | | | |
| | Resultat | 0 | | | | | | |
| | Markerfeld nachher | X | X | | | | X | |
| 4 | Markerfeld vorher | X | X | | | | X | |
| | Index | 3 | | | | | | |
| | Resultat | 0 | | | | | | |
| | Markerfeld nachher | X | X | X | | | X | |
| 5 | Markerfeld vorher | X | X | X | | | X | |
| | Index | 7 | | | | | | |
| | Resultat | 2 | | | | | | |
| | Markerfeld nachher | X | X | X | | | X | X |

Die Sequenz aus den Resultaten ist die Sortierinformation 19, die dem Entropiecodierer zugeführt werden kann, und lautet dann wie folgt:

| 1 | 4 | 0 | 0 | 2 |
|---|---|---|---|---|

Die differentielle Codierung, die im Entropiecodierer 20 erfolgt, kann auf verschiedene Art und Weise ablaufen. Die verschiedenen Möglichkeiten seien nachfolgend anhand des bereits beschriebenen Ausführungsbeispiels des Sortierverfahrens näher erläutert. Nach der Durchführung des Sortierverfahrens im Sortierer 17 ergibt sich folgende Folge von Pegelkoeffizienten und Sortierkoeffizienten:

| Pegelkoeffizienten | 2 | 2 | 1 | 1 | 1 |
|---|---|---|---|---|---|
| Sortierkoeffizienten | 1 | 4 | 0 | 0 | 2 |

Diese Folgen von Pegelkoeffizienten und Sortierkoeffizienten können auf verschiedene Art und Weise differentiell codiert werden.

Ausführungsbeispiel 1:

Eine erste Möglichkeit ist, Differenzen aus aufeinanderfolgenden Pegelkoeffizienten zu bilden. Bei der Codierung der Pegelkoeffizienten mit Hilfe von Differenzen ergeben sich folgende Zahlenfolgen:

1.1 Start beim ersten Pegelkoeffizienten:

2 0 1 0 0 EOB

2.1 Start beim letzten Pegelkoeffizienten:

1 0 0 1 0 EOB

Ausführungsbeispiel 2:

Auch die Sortierinformationen können differentiell codiert werden.

2.1. Direkte Codierung:

1 4 0 0 2

2.2. Differenzcodierung mit Start beim ersten Sortierkoeffizienten:

1 3 -4 0 2

2.3. Differenzcodierung mit Start beim letzten Sortierkoeffizienten:

2 -2 0 4 -3

2.4. Differenzcodierung mit Hilfe eines Prädiktors und Start beim ersten Koeffizienten:

1 3 0 0 2

Es sei angemerkt, dass der Prädiktor jeweils gleich dem letzten Sortierkoeffizienten gesetzt wird und dass zur Codierung des aktuellen Sortierkoeffizienten jeweils der Prädiktor vom aktuell zu codierenden Sortierkoeffizienten abgezogen wird. Dieses Verfahren wird so lange fortgesetzt, wie die Beträge der zugeordneten Pegelkoeffizienten gleich bleiben. Wenn sich die Werte der Pegelkoeffizienten ändern, wird der Prädiktor erneut auf den Startwert Null gesetzt.

Eine programmtechnische Realisierung dieser Codierung mit Hilfe eines Prädiktors läuft in ihrem hierfür wesentlichen Teil wie folgt ab:

```
PrevAbsLevel:=0

Pred:=0                                              *)

For i:=0 to k-1 do

        If not(abs(level[index[i]])=PrevAbsLevel) then

                Pred:=0                              Bilde Delta

        Delta[i]:=result[i]-pred;

        Pred:=result[i]

        PrevAbsLevel:=abs(level[index[i]])           Merke aktuellen Le-

    End for                                          vel und Resultat
```

\*) Wenn sich der Betrag des Pegels geändert hat, muss der
Prädiktor auf 0 zurückgesetzt werden.

Es sei angemerkt, dass bei den Ausführungsbeispielen 1 und 2 das EOB-Symbol nur einmal, also entweder im Zusammenhang mit den Pegelkoeffizienten oder den Sortierkoeffizienten, codiert werden braucht.

Ausführungsbeispiel 3:

Es besteht auch die Möglichkeit, mehrere Pegelwerte zusammenzufassen. Die Codierung erfolgt dann in Zahlenpaaren, wobei eine erste Zahl die Differenz zum vorhergehenden Pegelkoeffizienten angibt. Eine zweite Zahl dagegen gibt an, wie oft der Pegelkoeffizient auftritt. Bei der Codierung mit Hilfe von Zahlenpaaren ist ein EOB-Symbol nicht erforderlich:

3.1. Start beim ersten Pegelkoeffizienten:

(2,2) (1,3)

3.2. Start beim letzten Pegelkoeffizienten:

(1,3) (1,2)

Ausführungsbeispiel 4:

Auch mehrere Sortierkoeffizienten können zusammengefasst werden, denn es kommt häufig vor, dass die Sortierkoeffizienten mehrfach hintereinander den Wert Null aufweisen. Diese Nullfolgen können mit Hilfe der Null-Lauflängencodierung effektiv komprimiert werden. Die Codierung erfolgt dann in Zahlenpaaren, wobei eine erste Zahl den von Null verschiedenen Sortierkoeffizienten selbst und eine zweite Zahl die Anzahl der vor dem von Null verschiedenen Sortierkoeffizienten liegenden Nullen angibt.

4.1. Direkte Codierung der Sortierkoeffizienten ohne Differenzen:

(1,0) (4,0) (2,2)

4.2 Zusammenfassen der gemäß 2.2. differentiell codierten Sortierkoeffizienten:

(1,0) (3,0) (-4,0) (2,1)

4.3 Zusammenfassen der gemäß 2.3. differentiell codierten Sortierkoeffizienten:

(2,0) (-2,2) (4,1) (-3,0)

4.4. Zusammenfassen der gemäß 2.4. differentiell codierten Sortierkoeffizienten:

(1,0) (3,0) (2,2)

Die Information, dass überhaupt keine Umsortierung erfolgen muss, kann mit einem separaten Symbol codiert werden, denn in diesem Fall sind alle Sortierkoeffizienten gleich Null.

Ausführungsbeispiel 5:

Weiterhin besteht die Möglichkeit, die Pegelkoeffizienten und Sortierkoeffizienten jeweils paarweise zusammenzufassen. Die Codierung erfolgt dann in Zahlenpaaren, wobei eine erste Zahl die Differenz zum vorhergehenden Pegelkoeffizienten und die die zweite Zahl dem zugehörigen Sortierkoeffizienten angibt.

5.1. Start beim ersten Koeffizienten:

(2,1) (0,4) (1,0) (0,0) (0,2) EOB

5.2. Start beim letzten Koeffizienten:

(1,2) (0,0) (0,0) (1,4) (0,1) EOB

Ausführungsbeispiel 6:

Wenn zur Trennung der übermittelten Zahl eine EOB-Information erforderlich ist, kann sie jeweils mit den übermittelten Zahlen verknüpft werden. Im Falle der Ausführungsbeispiele 1 und 2 ergeben sich dann Tupel, während sich im Fall der Ausführungsbeispiele 3 bis 5 Tripel ergeben.

Die gemäß den Ausführungsbeispielen 1 bis 5 generierten Zahlenfolgen können anschließend mit Hilfe einer VLC (Variable Length Code)-Codierung codiert werden. In Frage kommt insbesondere die bekannte VLC-Codierung mit Huffman-Codes. Die Huffman-Codes werden nach einem bekannten Verfahren anhand der Auftrittswahrscheinlichkeit der zu codierenden Symbole generiert. Die Huffman-Codes sind dem Fachmann bekannt und als solche nicht Gegenstand der Anmeldung.

Neben den Pegeln müssen noch die Vorzeichen codiert werden. Da keine Korrelation unter den Vorzeichen bestehen, kann die Codierung der Vorzeichen für jeden von Null verschiedenen Koeffizienten mit einem Bit erfolgen. Beispielsweise kann ein negatives Vorzeichen eines Pegelkoeffizienten mit einer logischen Eins, und ein positives Vorzeichen mit einer logischen Null codiert werden.

Anstelle des Huffman-Codes kann auch der bereits im H.26L-Testmodell verwendete UVLC (Universal Variable Length Code) verwendet werden. Die Zuordnung der Symbole zu den Codes erfolgt im Zusammenhang mit dem UVLC ebenfalls entsprechend einer vorher bestimmten Auftrittswahrscheinlichkeit oder nach einem sogenannten "Move-to-Front"-Algorithmus. Eine weitere Möglichkeit besteht in der Verwendung von analytisch generierbarem Code, zum Beispiel dem Golomb-Code.

Die Decodierung erfolgt im Prinzip invers zur Encodierung und ihre Beschreibung ergibt sich folglich indirekt aus der Beschreibung der Encodierung.

Zum besseren Verständnis wird jedoch im folgenden auch die erfindungsgemäße Decodierung anhand des obigen konkreten Ausführungsbeispiels gezeigt:

Zunächst ist eine eventuelle differentielle Codierung oder Deltacodierung rückgängig zu machen. Dies erfolgt durch Decodieren eines Symbols, Addition eines Delta-Wertes oder Addition des Prädiktors und Anpassen des Prädiktors, in Analogie zur Encodierung. Nach diesem Schritt sind auf Decoderseite folgende Daten verfügbar:

Zum einen die decodierten, sortierten Levels:

| -2 | -2 | -1 | 1 | -1 |
|----|----|----|---|----|

Zum anderen die decodierten Sortier- oder Positionsinformationen:

| 1 | 4 | 0 | 0 | 2 |
|---|---|---|---|---|

Zur Decodierung der Positionsinformation wird wieder das zur Encodierung verwendete Markerfeld benötigt. Zu Beginn der Decodierung eines Blockes wird dieses als unmarkiert vorbelegt. Wenn die Positionsinformation gleich k ist, so werden im Markerfeld, jeweils vom Beginn des Markerfeldes an, k unmarkierte Positionen übersprungen und die darauf folgende unmarkierte Position ist der gesuchte Index. Diese Stelle des Markerfeldes wird daraufhin markiert und der Index dieser Stelle ist der Index des dazugehörigen Pegels. Das heißt der Pegel muss im rekonstruierten Block an dieser Stelle stehen.

Die Verarbeitung der Positionsinformation sei anhand der Positionsinformation 1, 4, 0, 0, 2 gezeigt:

| Schritt | | 1 | 2 | 3 | 4 | 5 | 6 | 7 |
|---------|---|---|---|---|---|---|---|---|
| 1 | Markerfeld vorher | | | | | | | |
| | Positionsinformation | 1 | | | | | | |
| | Resultierender Index | 2 | | | | | | |
| | Markerfeld nachher | | X | | | | | |
| 2 | Markerfeld vorher | 1. | X | 2. | 3. | 4. | | |
| | Positionsinformation | 4 | | | | | | |
| | Resultierender Index | 6 | | | | | | |
| | Markerfeld nachher | | X | | | | X | |
| 3 | Markerfeld vorher | | X | | | | X | |
| | Positionsinformation | 0 | | | | | | |
| | Resultierender Index | 1 | | | | | | |
| | Markerfeld nachher | X | X | | | | X | |
| 4 | Markerfeld vorher | X | X | | | | X | |
| | Positionsinformation | 0 | | | | | | |
| | Resultierender Index | 3 | | | | | | |
| | Markerfeld nachher | X | X | X | | | X | |
| 5 | Markerfeld vorher | X | X | X | | | X | |
| | Positionsinformation | 2 | | | | | | |
| | Resultierender Index | 7 | | | | | | |
| | Markerfeld nachher | X | X | X | | | X | X |

Die resultierenden Indizes der sortierten Levels

| -2 | -2 | -1 | 1 | -1 |
|----|----|----|---|----|

sind also:

| 2 | 6 | 1 | 3 | 7 |
|---|---|---|---|---|

Daraus ergibt sich schließlich der decodierte Block wieder zu:

| Index | 1 | 2 | 3 | 4 | 5 | 6 | 7 | 8 | ... | 16 |
|---|---|---|---|---|---|---|---|---|---|---|
| Level | -1 | -2 | 1 | 0 | 0 | -2 | -1 | 0 | ... | 0 |

Die hier beschriebenen Verfahren zur differentiellen Codierung und Decodierung eignen sich für die Verwendung im Rahmen existierender Videostandards wie H.263 und MPEG-4. Die Verfahren können auch für in der Standardisierung begriffene Standards wie H.26L sowie für entsprechende zukünftige Standards verwendet werden.
Abschließend sei angemerkt, dass die hier beschriebenen Vorrichtungen und Verfahren sowohl in Hardware als auch in Software realisiert werden können.

**Patentansprüche**

1.  Verfahren zur Codierung von Videosignalen mit den Verfahrensschritten:

    -   Bereitstellen einer Prädiktionsfehlermatrix;
    -   Umwandeln der Prädiktionsfehlermatrix in eine Folge von Pegelkoeffizienten und Längenkoeffizienten von Nullfolgen;
    -   Sortieren der Pegelkoeffizienten nach ihrem Betrag und Bilden einer Folge von Sortierkoeffizienten; und
    -   Differentielles Codieren der Pegelkoeffizienten.

2.  Verfahren nach Anspruch 1,
    bei dem die aus aufeinanderfolgenden Pegelkoeffizienten gebildeten Differenzen codiert werden.

3.  Verfahren nach Anspruch 2,
    bei dem die Pegelkoeffizienten in Zahlenpaare zusammengefasst werden, wobei eine erste Zahl jeweils den Differenzwert einer Pegeländerung und eine zweite Zahl die Anzahl der Wiederholungen des geänderten Pegelkoeffizienten angibt.

4.  Verfahren nach einem der Ansprüche 1 bis 3,
    bei dem die Sortierkoeffizienten differentiell codiert werden.

5.  Verfahren nach Anspruch 4,
    bei dem Differenzen von aufeinanderfolgenden Sortierkoeffizienten codiert werden.

6.  Verfahren nach Anspruch 4,
    bei dem die Sortierkoeffizienten jeweils als Differenzen zu einem Prädiktor codiert werden.

7.  Verfahren nach einem der Ansprüche 1 bis 3,
    bei dem die Sortierkoeffizienten in Zahlenpaaren codiert werden, wobei eine erste Zahl den Wert eines von Null verschiedenen Sortierkoeffizienten angibt und eine zweite Zahl die Länge einer benachbarten Nullfolge angibt.

8.  Verfahren nach Anspruch 1 oder 2,
    bei dem die Differenzen von Pegelkoeffizienten mit Sortierkoeffizienten paarweise zusammengefasst werden.

9.  Verfahren nach Anspruch 5 oder 6,
    bei dem die Differenzen der Pegelkoeffizienten mit den Differenzen der Sortierinformation paarweise zusammengefasst werden.

10. Verfahren nach einem der Ansprüche 1 bis 9,
    bei dem die Bildung der Differenzen mit einem ersten Koeffizienten beginnt.

**11.** Verfahren nach einem der Ansprüche 1 bis 9,
bei dem Bildung der Differenzen mit einem letzten Koeffizienten beginnt.

**12.** Verfahren nach einem der Ansprüche 1 bis 11,
bei dem die Folge von Koeffizienten oder die Folge von Differenzen von Koeffizienten mit einem das Ende der Folge abschließenden Symbol gekennzeichnet wird.

**13.** Verfahren zur Decodierung von Videosignalen mit den Verfahrensschritten:

- Differentielles Decodieren der Pegelkoeffizienten;
- Decodieren einer Sortierinformation und Umsortieren der Pegelkoeffizienten anhand der Sortierinformation; und
- Umwandeln der Folge von Pegelkoeffizienten und Längenkoeffizienten von Nullfolgen in eine Prädiktionsfehlermatrix.

**14.** Computerprogrammprodukt, das Programmcodes zur Ausführung eines Verfahrens nach einem der Ansprüche 1 bis 13 enthält.

FIG 1

FIG 2